Europäisches Patentamt

European Patent Office

Office européen des brevets

(19)

(11) Numéro de publication : **0 058 101 B1**

(12) **FASCICULE DE BREVET EUROPÉEN**

(45) Date de publication du fascicule du brevet :
05.06.85

(51) Int. Cl.⁴ : **B 29 C 47/00**, B 29 C 47/78, B 27 N 1/02

(21) Numéro de dépôt : 82400068.1

(22) Date de dépôt : 15.01.82

(54) **Procédé et installation de préparation d'un mélange de matière plastique et d'une charge solide.**

(30) Priorité : 16.01.81 FR 8100723

(43) Date de publication de la demande :
18.08.82 Bulletin 82/33

(45) Mention de la délivrance du brevet :
05.06.85 Bulletin 85/23

(84) Etats contractants désignés :
DE FR IT NL

(56) Documents cités :
DE-A- 2 212 329
DE-A- 2 226 287
DE-A- 2 241 111
DE-A- 2 601 696
FR-A- 2 202 765
FR-A- 2 380 857
GB-A- 1 529 944

(73) Titulaire : **CREUSOT-LOIRE**
**42 rue d'Anjou**
**F-75008 Paris (FR)**

(72) Inventeur : **Berger, Pierre**
**5 rue A. Merrheim**
**F-42100 Saint-Etienne (FR)**

(74) Mandataire : **Moncheny, Michel et al**
**c/o Cabinet Lavoix 2 Place d'Estienne d'Orves**
**F-75441 Paris Cedex 09 (FR)**

## Description

L'invention a pour objet un procédé et une installation de préparation d'un produit constitué d'un mélange d'une charge solide et d'un liant thermoplastique.

Depuis longtemps, on fabrique des produits à base d'une matière plastique à l'intérieur de laquelle a été introduite une charge solide. Celle-ci dépend des applications du produit et peut être, par exemple, de la sciure de bois, de la fibre de verre ou de carbone, du mica etc... On fabrique ainsi différents produits comme du bois aggloméré ou des isolants dont les propriétés dépendent de la matière plastique utilisée et de la charge solide introduite.

Bien entendu, la charge solide a normalement un prix beaucoup plus faible que la matière plastique, et il est intéressant d'en augmenter autant que possible la proportion, d'autant plus, que généralement, la matière plastique sert uniquement de liant entre les particules de charge solide.

C'est ainsi que l'on est arrivé à produire des mélanges contenant trois fois plus de charge solide que de matière plastique. Par exemple, avec de la sciure de bois, on peut arriver à des mélanges contenant 70, 75 % de sciure et 25 à 30 % de matière plastique.

Ces mélanges sont réalisés généralement dans une machine d'extrusion à vis. La matière plasti-que introduite à l'extrémité amont sous forme de grains et entraînée dans le fourreau est tout d'abord fondue, le fourreau étant éventuellement chauffé grâce à des enceintes de chauffage électrique ou à vapeur qui sont réparties sur toute sa longueur ou localisées à certains endroits.

Le document DE-A-2 601 696, décrit une machine de préparation d'un tel mélange, consti-tuée d'une extrudeuse comprenant une vis entraînée en rotation à l'intérieur d'un fourreau dans la partie médiane duquel débouche une seconde extrudeuse à une vis. La matière plastique introduite sous forme de granulés à l'extrémité amont et entraînée dans le fourreau est tout d'abord fondue puis mélangée avec la charge solide introduite par la seconde extrudeuse. Le fourreau de celle-ci peut être muni d'un manchon de chauffage qui permet d'élever la température de la charge solide de façon à éviter un durcissement par refroidissement du liant à l'endroit de l'introduction. Le mélange est ensuite homogénéisé avant d'être extrudé par une filière placée à l'extrémité aval. Ce document a servi de base pour l'élaboration du préambule des revendications 1 et 3.

Jusqu'à présent, on n'est pas parvenu à dépasser une proportion de 75 % de sciure de bois, et il en est pratiquement de même avec les autres charges solides. Dans le document DE-A-2 601 696, par exemple, malgré le chauffage préalable de la charge, la proportion de celle-ci atteint, au mieux, 61,5 % dans le cas du silicate de calcium.

En effet, si la quantité introduite est trop importante, la charge solide se répartit mal dans la matière plastique et les particules introduites, au lieu d'être bien enrobées par le liant, forment des grumeaux. L'échauffement se produit mal, certains points étant surchauffés alors que d'autres restent froids, la matière n'étant d'ailleurs pas régulièrement répartie le long des filets des vis.

L'invention a pour objet un perfectionnement permettant d'augmenter très sensiblement la proportion de charge solide et par conséquent de diminuer le coût du produit obtenu : ceci est obtenu, pour le procédé, avec les caractéristiques de la revendication 1 et, pour l'installation, avec celles de la revendication 3.

Conformément à l'invention, grâce à l'utilisation d'une extrudeuse comprenant deux vis identiques entraînées en rotation dans le même sens à l'intérieur du fourreau, la matière thermoplastique est d'abord répartie parfaitement sur la périphérie des vis de façon à recouvrir les filets en amont de l'orifice d'introduction et, ce dernier s'ouvrant largement sur les deux vis, on y déverse la charge solide en pluie de façon à saupoudrer la matière recouvrant les filets, la proportion de charge solide incorporée pouvant ainsi atteindre 85 % en poids du mélange.

Dans un mode de réalisation préférentiel, la charge solide est constituée par de la sciure de bois et est chauffée à l'abri de l'air dans un dispositif de dosage à la sortie duquel elle est désagrégée pour être déversée en pluie dans l'orifice d'introduction.

Les extrudeuses à deux vis sont bien connues et le document DE-A-2 241 111 décrit, par exemple, une telle machine dans laquelle la matière plastique est introduite sous forme de granulés à l'extrémité amont du fourreau, au moyen d'une trémie s'ouvrant largement sur les deux vis. Cependant, lorsque celles-ci tournent en sens contraire, la matière a tendance à s'accumuler sur la partie supérieure des vis, dans la zone centrale d'engrènement et l'on utilise une trémie à large ouverture remplie en permanence de granulés de matière plastique pour recouvrir complètement la partie supérieure des deux vis et obtenir un bon remplissage des filets.

Au contraire, le but de l'invention n'est pas d'obtenir un remplissage complet des filets mais d'améliorer les conditions d'introduction de la charge pour augmenter la proportion absorbée. A cet effet, on utilise des vis entraînées en rotation dans le même sens de façon à répartir parfaitement la matière fondue le long des filets et l'orifice à large ouverture n'est pas placé à l'extrémité amont de la machine pour le chargement de la matière plastique, mais dans la partie médiane du fourreau de façon à permettre le déversement en pluie de la charge solide sur la matière recouvrant les filets.

De préférence, le dispositif de dosage de la charge comprend deux vis identiques entraînées en rotation dans le même sens à l'intérieur d'un fourreau muni de moyens de chauffage de la charge et débouchant au-dessus de l'orifice central de l'extrudeuse de mélange par un orifice de sortie de section égale à celle des deux vis.

On a par exemple, mélangé de la sciure de bois à du polypropylène, dans une machine d'extrusion, qui, selon l'invention comporte deux vis identiques entraînées en rotation dans le même sens.

Le polypropylène est introduit par un orifice à l'extrémité amont du fourreau et est entraîné par l'engrènement des vis. Dans la partie centrale du fourreau est placé un orifice qui peut couvrir axialement une longueur de l'ordre de trois ou quatre fois le pas de vis. Dans le sens transversal, la largeur de l'orifice est de l'ordre de l'entraxe des vis.

En amont de l'orifice d'introduction, le polypropylène a été fondu et recouvre parfaitement la paroi interne des filets. Une machine à plusieurs vis, comme on le sait, réalise l'entraînement de la matière par l'engrènement des vis sans que les filets soient nécessairement remplis. En outre, dans les machines à vis co-rotatives, la matière est entraînée sur la périphérie des vis en passant d'une vis à l'autre dans la zone d'engrènement. Sur chaque vis, on a une zone plus remplie en amont de l'engrènement puisque celui-ci réalise une diminution de section et cette accumulation de matière qui se produit, pour une vis, au-dessus du plan passant par les axes, se produit au-dessous de ce plan pour l'autre vis. Ainsi, dans les machines co-rotatives, la matière est parfaitement répartie le long des filets et peut absorber dans les meilleures conditions la charge introduite.

On constate que si la sciure de bois est préchauffée, les particules qui sont déversées en pluie sur les filets ainsi « beurrés » de matière plastique, s'incorporent immédiatement à celle-ci qui n'a pas tendance à se figer autour de chaque particule comme cela se produisait lorsque la charge était froide. La matière plastique reste ainsi à la même température dans toutes ses parties, ce qui favorise l'homogénéisation.

C'est pourquoi l'on a intérêt à chauffer la sciure de bois à une température aussi proche que possible de celle atteinte par la matière plastique à la hauteur de l'orifice d'introduction. Cependant, il ne faut pas non plus que le chauffage de la charge entraîne l'inflammation de celle-ci lorsqu'il s'agit d'une matière combustible comme la sciure de bois. On peut avoir intérêt, pour éviter cette inflammation, à réaliser le chauffage autant que possible en absence d'air, par exemple à l'intérieur d'une vis doseuse.

Après cette introduction, la sciure de bois est mélangée à la matière plastique dans la partie aval de l'extrudeuse, celle-ci comportant de préférence une zone à pas inversé. On constate que l'on obtient à la sortie de la filière une matière parfaitement homogène contenant environ 85 % de sciure de bois.

Bien entendu, la température à laquelle on doit chauffer la charge dépend de la nature de celle-ci et de la nature du liant thermoplastique utilisé, de la fibre de verre, par exemple, pouvant être chauffée à une température plus élevée que le bois. Cependant, dans le cas général, la température de préchauffage sera comprise entre 150 et 250 °C.

Comme on l'a indiqué le procédé selon l'invention sera mis en œuvre de préférence dans une extrudeuse comportant au moins deux vis entraînées dans le même sens qui permet d'obtenir un meilleur beurrage des filets, mais il est bien évident que le procédé pourrait également être utilisé dans d'autres sortes d'extrudeuses et pour toute sorte de produits.

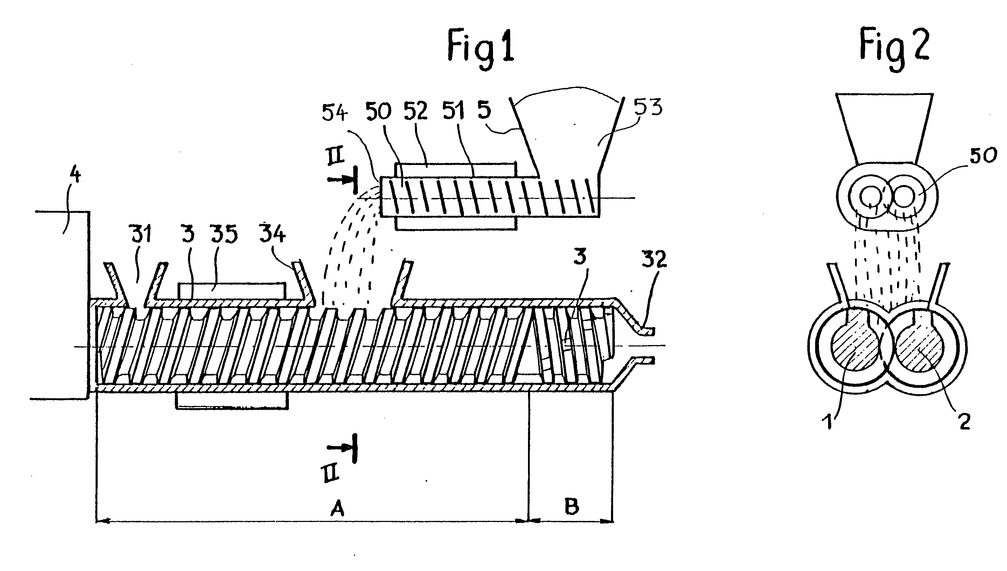

Sur les figures 1 et 2, on a représenté schématiquement et à titre d'exemple une installation pour la mise en œuvre du procédé selon l'invention.

La figure 1 est une vue en coupe longitudinale et la figure 2 une vue en coupe transversale selon 2.2 figure 1.

Comme on l'a indiqué, la machine comprend par exemple deux vis 1 et 2 placées à l'intérieur d'un fourreau 3 qui les enveloppe. De préférence, les deux vis sont identiques et entraînées en rotation dans le même sens par un moteur et un réducteur 4.

Sur la plus grande partie des vis, le pas de celles-ci détermine un mouvement vers l'aval, vers la droite sur la figure, de la matière introduite par l'orifice d'entrée 31. Le fourreau 3 est muni à son extrémité d'une filière 32 qui donne au produit la section voulue par extrusion, celle-ci étant effectuée par une mise en pression à l'extrémité aval. A cet effet, le pas des vis 1 et 2 peut se reserrer à l'extrémité aval, mais, de préférence, la zone A à pas direct d'entraînement vers l'aval est suivie d'une zone B comportant quelques filets à pas inversé qui tendent à faire remonter la matière vers l'amont, le passage vers l'aval étant contrôlé par des fenêtres 33 ménagées dans les filets. De ce fait, la zone B réalise un freinage de la matière et par conséquent une montée en pression à l'extrémité de la zone A.

En outre, le passage dans les filets à pas inversé augmente l'homogénéisation de la matière grâce à la montée en pression et au passage dans les fenêtres.

Vers le milieu de la zone A, le fourreau est muni d'une large ouverture 34 qui dans le sens longitudinal, couvre 3 à 4 fois le pas des filets et, dans le sens transversal, a une largeur de l'ordre de l'entraxe des vis 1 et 2.

Au-dessus de l'ouverture 34 débouche la sortie d'un appareil de dosage 5 qui peut être du type connu comportant une trémie munie à sa partie inférieure d'une vis de dosage.

De préférence, on utilise comme moyen de dosage deux vis 50 identiques entraînées en rotation dans le même sens à l'intérieur d'un fourreau 51 qui les enveloppe et qui comprend un orifice d'entrée 53 et un orifice de sortie 54 séparés par une certaine distance constituant une section de transport le long de laquelle la matière entraînée peut être chauffée à l'abri de l'air. Le moyen de chauffage peut être par exemple une enceinte 52 entourant le fourreau 51 et parcourue par un fluide tel que de la vapeur, ou bien un manchon 52 de chauffage par induction, ce procédé permettant un excellent contrôle de la température de chauffage.

Grâce à l'utilisation de deux vis 50 corotatives, la matière constituant la charge solide est entraînée autour des vis, selon le processus décrit plus haut, ce qui augmente la surface de chauffage et par conséquent l'efficacité de celui-ci. La montée en température se fait rapidement et à l'abri de l'air, ce qui diminue le risque d'inflammation dans le cas de la sciure de bois.

En outre, la matière est entraînée par l'engrènement des vis même lorsque les filets ne sont pas complètement remplis et, l'orifice de sortie 54 ayant une section égale à celle des vis, la matière n'est pas comprimée dans la section de transport et de chauffage où peut se produire également un assèchement, la vapeur produite pouvant s'évacuer facilement grâce à la faible compression. L'orifice de sortie 54 s'ouvre largement sur les vis qui, en tournant dans le même sens, se râclent mutuellement, ce qui favorise la désagrégation de la matière et son déversement en pluie, en particulier dans le cas de la sciure de bois.

La matière plastique introduite par exemple sous forme de granulés, par l'orifice 31 est entraînée par la rotation des vis, et commence à fondre, le fourreau 3 étant éventuellement muni lui-même d'une enceinte de chauffage 35. Lorsque la matière arrive dans la zone de l'ouverture 34, la matière plastique recouvre bien les filets. La sciure de bois introduite dans la trémie 5 et entraînée par les vis 50, est chauffée par l'enceinte 52 à la température voulue. Elle tombe en pluie dans le large orifice 34 de façon à saupoudrer les filets. Comme on l'a indiqué, le mélange s'effectue de façon excellente dans la suite de la zone A, est homogénéisé dans la zone B et extrudé par la filière 32.

On arrive ainsi à introduire dans la matière plastique une quantité de sciure de bois atteignant 85 % en poids du mélange. La proportion de liant thermoplastique est donc presque divisée par deux puisqu'elle passe de 25 ou 30 % à seulement 15 % et l'avantage économique est évidemment important.

Bien entendu, l'invention ne se limite pas aux détails du mode de réalisation qui vient d'être décrit, d'autres dispositions pouvant évidemment être utilisées pour la mise en œuvre du procédé sans sortir du cadre de l'invention.

## Revendications

1. Procédé de préparation d'un produit constitué d'un mélange d'une charge solide et d'un liant thermoplastique au moyen d'une extrudeuse limitée par un fourreau le long duquel on réalise successivement, de l'amont à l'aval, la fusion d'une matière thermoplastique constituant le liant, l'introduction de la charge solide par un orifice ménagé dans la partie centrale du fourreau de l'extrudeuse, et enfin, dans la partie aval de l'extrudeuse, le mélange des constituants et son extrusion, la charge solide étant chauffée avant son introduction dans l'extrudeuse, à une température sensiblement égale à celle atteinte par la matière à l'endroit de la zone d'introduction, caractérisé par le fait que, grâce à l'utilisation d'une extrudeuse comprenant deux vis (1 & 2) identiques entraînées en rotation dans le même sens à l'intérieur du fourreau (3), la matière thermoplastique est d'abord répartie parfaitement sur la périphérie des vis de façon à recouvrir les filets en amont de l'orifice d'introduction, que ce dernier s'ouvre largement sur les deux vis, qu'on y déverse la charge solide en pluie de façon à saupoudrer la matière recouvrant les filets, la proportion de charge solide incorporée pouvant ainsi atteindre 85 % en poids du mélange.

2. Procédé de réparation selon la revendication 1, caractérisé par le fait que la charge solide est constituée par de la sciure de bois et est chauffée à l'abri de l'air dans un dispositif de dosage (5, 50) à la sortie duquel elle est désagrégée pour être déversée en pluie dans l'orifice d'introduction.

3. Installation de préparation d'un produit constitué d'un mélange d'une charge solide et d'un liant thermoplastique comprenant une extrudeuse limitée par un fourreau (3) le long duquel on réalise successivement, de l'amont à l'aval, la fusion du liant, l'introduction de la charge, le mélange des constituants et son extrusion, la charge étant introduite par un orifice central (34) placé dans la partie médiane du fourreau (3), grâce à un dispositif de dosage à vis (5, 50) muni de moyens de chauffage de la charge, caractérisé par le fait que l'extrudeuse (3) comprend, de façon connue en soi, deux vis parallèles identiques (1, 2) entraînées en rotation dans le même sens à l'intérieur du fourreau (3), que l'orifice central (34) d'introduction de la charge s'ouvre largement sur les deux vis (1, 2) et est placé au-dessous de la sortie du dispositif de dosage (5, 50), celui-ci réalisant un chauffage à l'abri de l'air et sans compression suivi d'une désagrégation de la charge pour le déversement en pluie de celle-ci sur la matière fondue recouvrant les filets.

4. Installation de préparation selon la revendication 3, caractérisé par le fait que le dispositif de dosage (5) de la charge comprend deux vis (50) entraînées en rotation dans le même sens à l'intérieur d'un fourreau (51) comprenant un orifice d'entrée dans lequel débouche une trémie d'alimentation (5), une section de transport munie de moyens (52) de chauffage de la charge et un orifice de sortie (54) de section égale à celle des deux vis et s'ouvrant au-dessus de l'orifice central (34) du fourreau (3) de l'extrudeuse.

5. Installation de préparation selon l'une des revendications 3 ou 4, caractérisé par le fait que l'orifice central (34) d'introduction de la charge couvre, dans le sens longitudinal, au moins trois fois le pas des filets des deux vis (1, 2) et, dans le

4

sens transversal, sensiblement l'entraxe des vis (1, 2).

## Claims

1. Process for the preparation of a product consisting of a mixture of a solid filler and a thermoplastic binder by means of an extruder bounded by a barrel along which are produced in succession, from an upstream towards a downstream direction, the melting of a thermoplastic material forming the binder, the addition of the solid filler through an orifice arranged in the middle part of the extruder barrel and, finally in the downstream part of the extruder, the mixture of the components and its extrusion, the solid filler being heated before it is introduced into the extruder, to a temperature substantially equal to that attained by the material at the location of the addition zone, characterized in that, by virtue of the use of an extruder incorporating two identical screws (1 & 2) driven in rotation in the same direction inside the barrel (3), the thermoplastic material is first perfectly distributed over the periphery of the screws so as to cover the flights upstream of the addition orifice, that the latter opens widely over the two screws, that the solid filler is poured into it as a shower so as to dust the material covering the flights, the proportion of the solid filler added being thus capable of reaching 85 % by weight of the mixture.

2. Preparation process according to Claim 1, characterized in that the solid filler consists of wood sawdust and is heated in the absence of air in a metering device (5, 50) at the outlet of which it is disintegrated to be poured as a shower into the addition orifice.

3. Equipment for preparing a product consisting of a mixture of a solid filler and a thermoplastic binder comprising an extruder bounded by a barrel (3) along which are produced in succession, from an upstream towards a downstream direction, the melting of the binder, the addition of the filler, the mixture of the components and its extrusion, the filler being added through a central orifice (34) located in the median part of the barrel (3), by virtue of a screw metering device (5, 50) equipped with means for heating the filler, characterized in that the extruder (3) incorporates, in a manner known per se, two identical parallel screws (1, 2) driven in rotation in the same direction inside the barrel (3), that the central orifice (34) for adding the filler opens widely over the two screws (1, 2) and is placed below the outlet of the metering device (5, 50), the latter producing heating in the absence of air and without compression followed by a disintegration of the filler in order that the latter pours in a shower over the molten material covering the flights.

4. Preparation equipment according to Claim 3, characterized in that the filler metering device (5) comprises two screws (50) driven in rotation in the same direction inside a barrel (51) incorporating an addition orifice into which opens a feed hopper (5), a conveying section equipped with means (52) for heating the filler and an outlet orifice (54) with a cross-section equal to that of the two screws and opening above the central orifice (34) of the extruder barrel (3).

5. Preparation equipment according to either of Claims 3 or 4, characterized in that the central orifice (34) for adding the filler covers, in the lengthwise direction, at least three times the pitsch of the flights of the two screws (1, 2) and, in the transverse direction, substantially the distance separating the axes of the screws (1, 2).

## Patentansprüche

1. Verfahren zur Aufbereitung einer Substanz bestehend aus einer Mischung eines festen Füllmaterials und eines Thermoplast-Bindemittels mit Hilfe eines Extruders, der durch einen Zylinder beschränkt ist, wobei entlang desselben von vorne nach hinten das Schmelzen eines das Bindemittel bildenden Thermoplaststoffes, die Zuführung des festen Füllmaterials durch eine in dem Mittelteil des Extruderzylinders angeordnete Öffnung, und schliesslich, in dem hinteren Teil des Extruders, die Mischung der Bestandteile und deren Extrusion nacheinander durchgeführt wird — das feste Füllmaterial wird vor dessen Zuführung in den Extruder auf eine Temperatur erhitzt, die im wesentlichen der durch den Stoff in der Einfüllungszone erreichten Temperatur entspricht — dadurch gekennzeichnet, dass durch den Einsatz eines Extruders mit zwei identischen innen in dem Zylinder (3) gleichsinnig rotierende Schnecken (1 & 2) der Thermoplaststoff zuerst an der Peripherie der Schnecken einwandfrei derart verteilt wird, dass er die Schraubengänge vor der Einfüllöffnung überdeckt, dass diese sich über den Schnecken weit öffnet, dass das Füllmaterial regenartig derart darüber öffnet, dass das Füllmaterial regenartig derart darüber geschüttet wird, dass der die Schraubengänge überdeckende Thermoplaststoff damit bestreut wird, wobei der Anteil des zugesetzten festen Füllmaterials somit 85 Gewichtsprozente der Mischung erreichen kann.

2. Aufbereitungsverfahren nach Anspruch 1, dadurch gekennzeichnet, dass das feste Füllmaterial aus Holzsägemehl besteht und unter Luftausschluss in einer Dosiereinrichtung (5, 50) erhitzt wird, wobei es am Austritt derselben zersetzt wird um regenartig in die Einfüllöffnung geschüttet zu werden.

3. Anlage zur Aufbereitung einer Substanz bestehend aus einer Mischung eines festen Füllmaterials und eines Thermoplast-Bindemittels, die einen durch einen Zylinder (3) beschränkten Extruder umfasst, wobei entlang desselben von vorne nach hinten das Schmelzen des Bindemittels, die Zuführung des Füllmaterials, die Mischung der Bestandteile und deren Extrusion nacheinander durchgeführt wird — die Zuführung des Füllmaterials erfolgt über eine in dem Mittelteil des Zylinders (3) angeordnete zentrale Öffnung (34) mit Hilfe einer Schneckendosiereinrichtung (5, 50), die Mittel zum Aufheizen des Füllmaterials aufweist — dadurch gekennzeichnet, dass der Extruder (3) in an sich bekannter Weise zwei identische innen in dem Zylinder (3) gleichsinnig rotierende parallele Schnecken (1, 2) aufweist, dass die zentrale Öffnung (34) zum Einfüllen des Füllmaterials sich weit über den beiden Schnecken (1, 2) öffnet und unter der Austrittsöffnung der Dosiereinrichtung (5, 50) angeordnet ist, in welcher eine drucklose Erhitzung unter Luftausschluss des Füllmaterials mit nachfolgender Zersetzung stattfindet zwecks regenartige Ausschüttung desselben auf den geschmolzenen die Gewindegänge überdeckenden Thermoplaststoff.

4. Aufbereitungsanlage nach Anspruch 3, dadurch gekennzeichnet, dass die Dosiereinrichtung (5) des Füllmaterials zwei Schnecken (50) umfasst, die innen in einem Zylinder (51) mit einer Eintrittsöffnung, in welche ein Fülltrichter (5) mündet, gleichsinnig rotieren, sowie einen Transportabschnitt mit Mitteln (52) zum Aufheizen des Füllmaterials und eine Austrittsöffnung (54) mit einem Querschnitt, die demjenigen der beiden Schnecken entspricht, wöbei diese sich über der zentralen Öffnung (34) des Zylinders (3) des Extruders öffnet.

5. Aufbereitungsanlage nach einem der Ansprüche 3 oder 4, dadurch gekennzeichnet, dass die zentrale Öffnung (34) zum Zuführen des Füllmaterials in Längsrichtung mindestens dreimal die Teilung der Gewindegänge der beiden Schrauben (1, 2) und in Querrichtung im wesentlichen den Achsabstand der Schrauben (1, 2) überdeckt.

# Fig 1

# Fig 2

0 058 101